# EUROPEAN PATENT APPLICATION

(11) **EP 2 527 806 A1**
(43) Date of publication of application: **28.11.2012**
(21) Application number: 11734598.3
(22) Date of filing: 17.01.2011
(51) Int. Cl.: G01F 23/36

(54) **METHOD FOR MANUFACTURING LIQUID LEVEL DETECTION DEVICE, AND LIQUID LEVEL DETECTION DEVICE**

(30) Priority: 21.01.2010 JP 2010011288
(71) Applicant: Nippon Seiki Co., Ltd., Niigata 940-8580 (JP)
(72) Inventor: TAKAHASHI,Tsuyoshi, Nagaoka Niigata (JP); YAMAURA, Takayuki, Nagaoka Niigata (JP)
(74) Representative: Jackson, Richard Eric
(86) International application number: PCT/JP2011/050639
(87) International publication number: WO 2011/089992

(57) **Abstract**

Provided is a method for manufacturing a liquid level detection device, which enables the simplification of the process of manufacturing the liquid level detection device and the reduction of manufacturing cost. First, a terminal continuous body (36) formed by coupling, by a coupling member (37, 38), a plurality of terminals (35) each comprising a slide terminal (35a) which slides on an electrode that rotates by receiving the fluctuation of a float and an outer output terminal (35b) which outputs an electric signal to the outside is prepared. The prepared terminal continuous body (36) is disposed in a mold for molding a frame body (30) in which part of the terminal continuous body (36) is embedded. Next, a material for the frame body (30) is poured into the mold in which the terminal continuous body (36) is disposed to mold the frame body (30). Finally, the coupling member (37, 38) is cut and removed from the molded frame body (30) to release the coupling between the terminals, thereby producing the frame body (30). Note that the coupling member (37, 38) connects the centers or the vicinities of the centers of the terminals (35) .

## Description

### Technical Field

The present invention relates to a method of manufacturing a liquid level detection device that detects, for example, the liquid level (the position of the liquid surface) inside a tank, and to the liquid level detection device.

### Background Art

Various types of liquid level detection device have been developed and commercialized as liquid level detection devices installed in fuel tanks of vehicles, marine vessels, and the like. As a heretofore known example of a float type liquid level detection device, which is one of these types, a description will be given of a liquid level detection device disclosed in Patent Document 1.

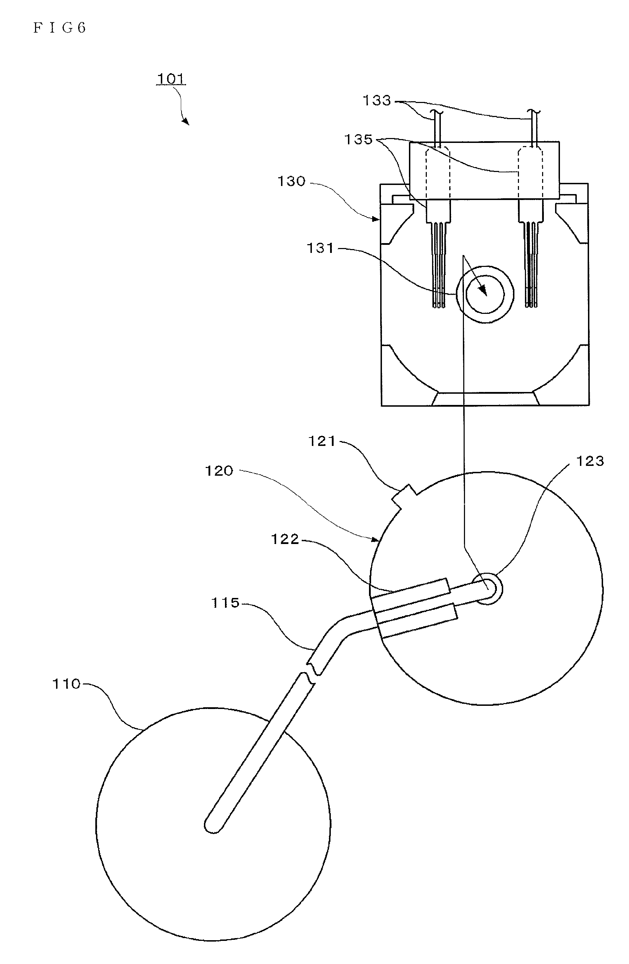

Fig. 6 is an exploded plan view showing a heretofore known liquid level detection device. The liquid level detection device 101 includes a float 110, a float arm 115, to one end of which the float 110 is attached, an arm holder 120, to which the other end of the float arm 115 is attached, and a support frame 130, which pivotably supports the arm holder 120. The position of the float 110, which floats in the liquid, fluctuates vertically along with a fluctuation of the liquid level. Then, owing to the vertical movement of the float 110, the float arm 115 and arm holder 120 pivot around a pivot shaft bearing portion 131 formed on the support frame 130.

An unshown circuit substrate is provided on the rear surface in the diagram of the arm holder 120. A resistor, and an electrode connected to the resistor (neither shown), are formed on the circuit substrate. Meanwhile, two liquid level detection terminals 135 that slide on the electrode on the circuit substrate are embedded in the support frame 130. The liquid level detection terminals 135 detect an electrical resistance value at points of contact with the electrode that change along with the pivoting of the arm holder 120, and output an electrical signal thereof to the exterior via a lead 133.

### Related Art Documents

### Patent Documents

Patent Document 1: JP-A-2005-241553

### Outline of the Invention

### Problems to be Solved by the Invention

When manufacturing the liquid level detection device 101 disclosed in Patent Document 1, it is necessary, in order to embed the liquid level detection terminals 135 in the support frame 130, to set the liquid level detection terminals 135 one by one in a mold for molding the support frame 130. This step, being extremely troublesome and complicating the manufacturing process, is a factor in pushing up the manufacturing cost of the liquid level detection device 101.

The invention, having been contrived bearing in mind the heretofore described problem, has an object of providing a method of manufacturing a liquid level detection device that simplifies a liquid level detection device manufacturing process and reduces the manufacturing cost, and a liquid level detection device.

### Means for Solving the Problems

In order to solve the heretofore described problem, a liquid level detection device manufacturing method according to a first aspect of the invention is a method of manufacturing a liquid level detection device that detects a liquid level using the fluctuation of a float, the method characterized by including a step of preparing a terminal continuous body in which a plurality of terminals, having a slide terminal that slides on an electrode that pivots by receiving the fluctuation of the float and an external output terminal that outputs an electrical signal to the exterior, are formed by being coupled by a coupling member, a step of disposing the terminal continuous body in a mold for molding a frame body in which one portion of the terminal continuous body is embedded, a step of injecting material of the frame body into the mold in which the terminal continuous body is disposed, and molding the frame body, and a step of disconnecting and removing the coupling member from the molded frame body, breaking the condition of coupling between the plural terminals, wherein the coupling member connects the centers, or vicinities of the centers, of the terminals.

Also, in order to solve the heretofore described problem, a liquid level detection device according to a second aspect of the invention is a liquid level detection device that detects a liquid level using the fluctuation of a float, the device characterized by including a frame body in which is embedded a pair of terminals having a slide terminal that slides on an electrode for detecting the liquid level using the fluctuation of the float and an external output terminal that outputs an electrical signal to the exterior, wherein an aperture for separating the pair of terminals is provided in the frame body.

Also, in order to solve the heretofore described problem, a liquid level detection device according to a third aspect of the invention is a liquid level detection device that detects a liquid level using the fluctuation of a float, the device characterized by including a frame body in which is embedded a pair of terminals having a slide terminal that slides on an electrode for detecting the liquid level using the fluctuation of the float and an external output terminal that outputs an electrical signal to the exterior, wherein holes into which the frame body penetrates, provided in the vicinities of the outer edges of the frame body, are formed in the terminals. Advantage of the Invention

According to the invention, it is possible to provide a method of manufacturing a liquid level detection device whereby it is possible to simplify a liquid level detection device manufacturing process and reduce the manufacturing cost, and a liquid level detection device.

### Brief Description of the Drawings

[Fig. 1] Fig. 1 is an exploded plan view of a liquid level detection device according to an embodiment of the invention.
[Fig. 2] Fig. 2 is diagrams showing components of the liquid level detection device according to this embodiment of the invention, wherein (a) is a side view of a support frame shown by an arrow IIIa-IIIa in Fig. 1, (b) is a side view of an arm holder shown by an arrow IIIb-IIIb in Fig. 1, and (c) is a plan view showing the rear surface of the arm holder shown by an arrow c-c in Fig. 2(b).
[Fig. 3] Fig. 3 is a schematic view showing an action of the liquid level detection device according to this embodiment of the invention.
[Fig. 4] Fig. 4 is schematic views showing in manufacturing order ((a) to (c)) of a method of manufacturing the support frame configuring the liquid level detection device according to this embodiment of the invention.
[Fig. 5] Fig. 5 is schematic views showing in manufacturing order ((a) to (c)) of a method of manufacturing the support frame configuring the liquid level detection device according to another embodiment of the invention.
[Fig. 6] Fig. 6 is an exploded plan view showing a heretofore known liquid level detection device.

### Mode for Carrying Out the Invention

Hereafter, a description will be given, referring to the drawings, of a liquid level detection device manufacturing method and liquid level detection device according to embodiments of the invention.

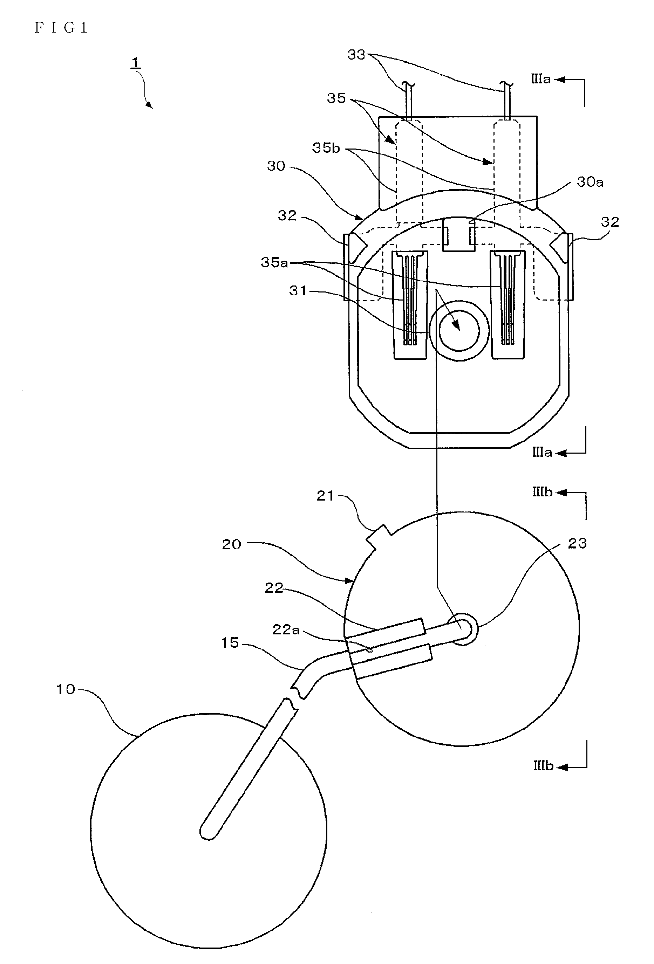

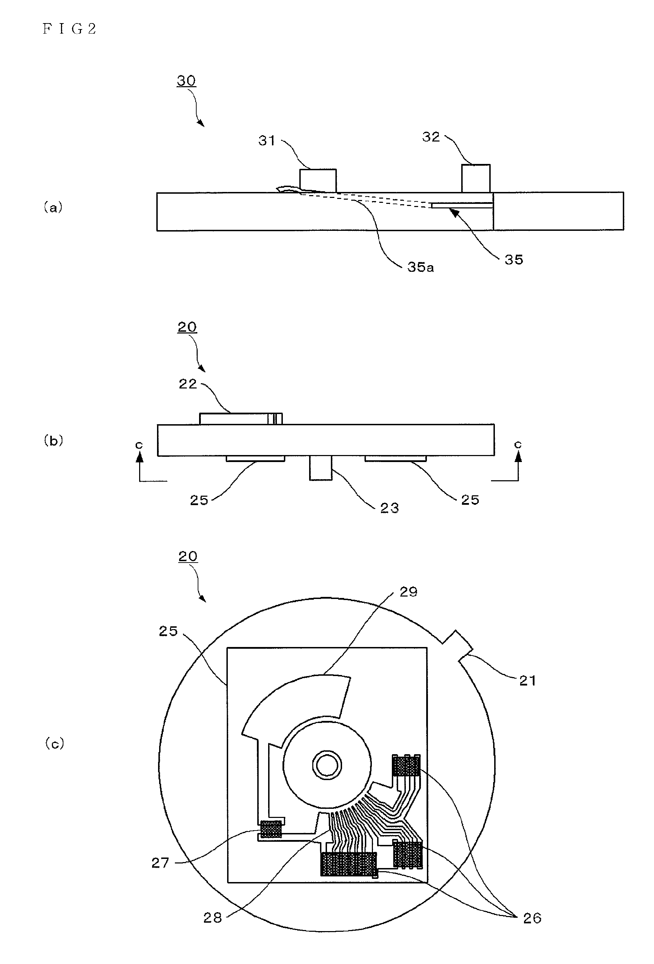

Fig. 1 shows an exploded plan view of a liquid level detection device 1 according to an embodiment of the invention. Also, Fig. 2 is diagrams showing components of the liquid level detection device 1, wherein (a) is a side view of a support frame 30 shown by an arrow IIIa-IIIa in Fig. 1, (b) is a side view of an arm holder 20 shown by an arrow IIIb-IIIb in Fig. 1, and (c) is a diagram showing a rear view of the arm holder 20 shown by an arrow c-c in Fig. 2(b).

As shown in Fig. 1, the liquid level detection device 1 according to this embodiment of the invention includes a float 10, a float arm 15, to one end of which the float 10 is attached, the arm holder 20, to the center of which the other end of the float arm 15 is connected, and the support frame (frame body) 30, which pivotably supports the arm holder 20. As shown by an arrow in Fig. 1, the arm holder 20 to which the float arm 15 is attached is such that a pivot shaft 23 formed on the rear surface (hereafter, the front side plane in Fig. 1 will be referred to as the front surface (the upper side plane in Fig. 2), and the back side plane as the rear surface (the lower side plane in Fig. 2) is inserted into a pivot shaft bearing portion 31 of the support frame 30. Because of this, the arm holder 20 is pivotably supported by the support frame 30.

The float 10 is formed from, for example, a synthetic resin, receives buoyancy from a liquid which is a target of a liquid level measurement, and floats in the liquid. It is preferable that the form of the float 10 is an approximate barrel form, so that the float 10 floats in the liquid in a stable condition.

The float arm 15 is formed from, for example, a metal wire, and connects the float 10 and arm holder 20. By forming the float arm 15 from a metal wire in this way, it is possible for the float 10 attached to the leading end of the float arm 15 to be reliably held. Also, one end of the float arm 15 is fitted into an aperture (not shown) formed in the center of the arm holder 20. Because of this, the float arm 15 is fixed to the center of the arm holder 20.

The arm holder 20 is formed from, for example, a synthetic resin formed in an approximate circular plate form. The arm holder 20 has an arm fixing portion 22 for sandwiching the float arm 15, a rotation limiting key 21 for regulating the pivoting of the arm holder 20, and a circuit substrate 25 (Fig. 2).

The arm fixing portion 22 is formed on the front surface of the arm holder 20. The arm fixing portion 22 is configured of two protruding pieces aligned in parallel in the radial direction of the arm holder 20, while a stopper (not shown) is formed in a protruding form in an end portion (an upper end portion in Fig. 2(b)) of the inner side surfaces forming an insertion opening 22a for the float arm 15. Because of this, on the float arm 15 being inserted into the arm fixing portion 22, the two protruding pieces elastically deform toward the outer side, and the insertion opening 22a for the float arm 15 is expanded. On the float arm 15 being pressed further into the insertion opening 22a, the float arm 15 is inserted into the gap between the two protruding pieces, and thus fixed in the arm fixing portion 22.

The rotation limiting key 21 is formed projecting from the side surface of the arm holder 20, and regulates the pivoting of the arm holder 20 by coming into contact with a pivot limiting projection 32 of the support frame 30. A specific function of the rotation limiting key 21 will be described hereafter.

The circuit substrate 25 is attached to the rear surface of the arm holder 20, as shown in Fig. 2 (c). A first resistor 26, a first electrode 28 connected to the first resistor 26, a second electrode 29 connected to the first electrode 28, and a second resistor 27 provided between the first electrode 28 and second electrode 29, are formed on the circuit substrate 25. The first and second resistors 26 and 27 are formed from, for example, ruthenium oxide. Also, the first and second electrodes 28 and 29 are formed from, for example, an alloy of silver and palladium. One each of a pair of liquid level detection terminals 35 provided on the support frame 30, as described hereafter, slides on the first and second electrodes 28 and 29. That is, the first electrode 28 is positioned along a first slide path along which one of the liquid level detection terminals 35 slides, while the second electrode 29 is positioned along a second slide path along which the other liquid level detection terminal 35 slides. The first electrode 28 and second electrode 29 are electrodes for detecting a liquid level.

The support frame 30 is formed from, for example, a synthetic resin, and the cylindrical pivot shaft bearing portion 31 into which the pivot shaft 23 formed on the arm holder 20 is inserted is formed on the front surface of the support frame 30. The arm holder 20 is pivotably supported by the support frame 30 by the pivot shaft 23 being inserted into the pivot shaft bearing portion 31.

Also, the support frame 30 has two pivot limiting projections 32 projecting from the front surface of the support frame 30. The pivot limiting projections 32, together with the pivot limiting key 21 formed on the arm holder 20, limit the pivoting of the arm holder 20 to a predetermined angle range. To describe more specifically, the pivot limiting projections 32 are formed in positions in which they come into contact with the pivot limiting key 21 projecting from the side surface of the arm holder 20 when the arm holder 20 pivots. Then, the pivoting movement of the arm holder 20 is stopped by the pivot limiting projections 32 and pivot limiting key 21 coming into contact. Because of this, the arm holder 20 can only pivot within an angle range formed when joining the pivot shaft bearing portion 31 and two pivot limiting projections 32. Because of this, an abnormal pivoting movement of the arm holder 20 is prevented, and erroneous detections by the liquid level detection device 1 are suppressed.

Also, the support frame 30 includes the two liquid level detection terminals 35 as insert members. The liquid level detection terminals 35 have slide terminals 35a that slide on the first and second electrodes 28 and 29 formed on the circuit substrate 25 of the arm holder 20, and external output terminals 35b that output an electrical signal to an external circuit (not shown). One liquid level detection terminal 35 of the two liquid level detection terminals 35 slides on the first electrode 28 using the sliding terminal 35a, while the other liquid level detection terminal 35 slides on the second electrode 29 using the sliding terminal 35a. Then, when the slide terminals 35a slide on the electrodes 28 and 29 in a condition in which a voltage is applied to the electrodes 28 and 29, the path of a current flowing from one slide terminal 35a to the other slide terminal 35a (a path passing through the first resistor 26) changes in accordance with the positions of the slide terminals 35a. Because of this, an electrical signal in accordance with the resistance value of the first resistor 26, which is in the path along which the current flows, is output to an external circuit (not shown) via leads 33 connected to the pair of external output terminals 35b.

Also, a disconnection aperture portion 30a for separating the pair of liquid level detection terminals 35 is formed in the support frame 30. The support frame 30 manufacturing method will be described hereafter but, in a manufacturing step, the two liquid level detection terminals 35 are embedded in the support frame 30 in a connected condition. The disconnection aperture portion 30a is an aperture opened in order to secure a space for separating the connected pair of liquid level detection terminals 35.

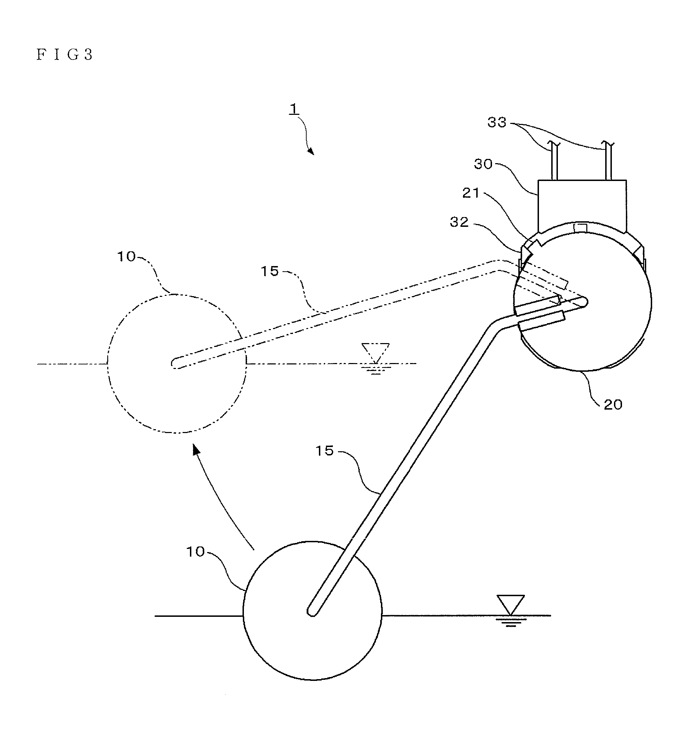

Next, a description will be given of a specific action of the liquid level detection device 1. Fig. 3 is a schematic view showing an action of the liquid level detection device 1 according to this embodiment of the invention. As shown in the diagram, the float 10 receives buoyancy from a liquid contained in a tank, or the like, and floats in the liquid. Then, on the liquid in the tank being replenished and the liquid level rising, the float 10 rises along with the rise of the liquid level (the arrow in the diagram). At this time, the float 10 causes the directly or indirectly connected float arm 15 and arm holder 20 to pivot with respect to the support frame 30. When the arm holder 20 pivots with respect to the support frame 30 in this way, the liquid level detection terminals 35 (Fig. 2) embedded in the support frame 30 slide on the first and second electrodes 28 and 29 (Fig. 2), and the positions of contact with the first and second electrodes 28 and 29 change. The liquid level detection terminals 35 output an electrical signal in accordance with the electrical resistance of the current channel path in the changed contact positions to an external circuit (not shown) via the leads 33. The electrical signal being a signal in accordance with the liquid level, the external circuit derives the liquid level based on the signal. Although a description has been given here of an action of the liquid level detection device 1 when the liquid level rises, it goes without saying that when the liquid level falls, the float 10, and the like, of the liquid level detection device 1 perform movements the reverse of those of the heretofore described action.

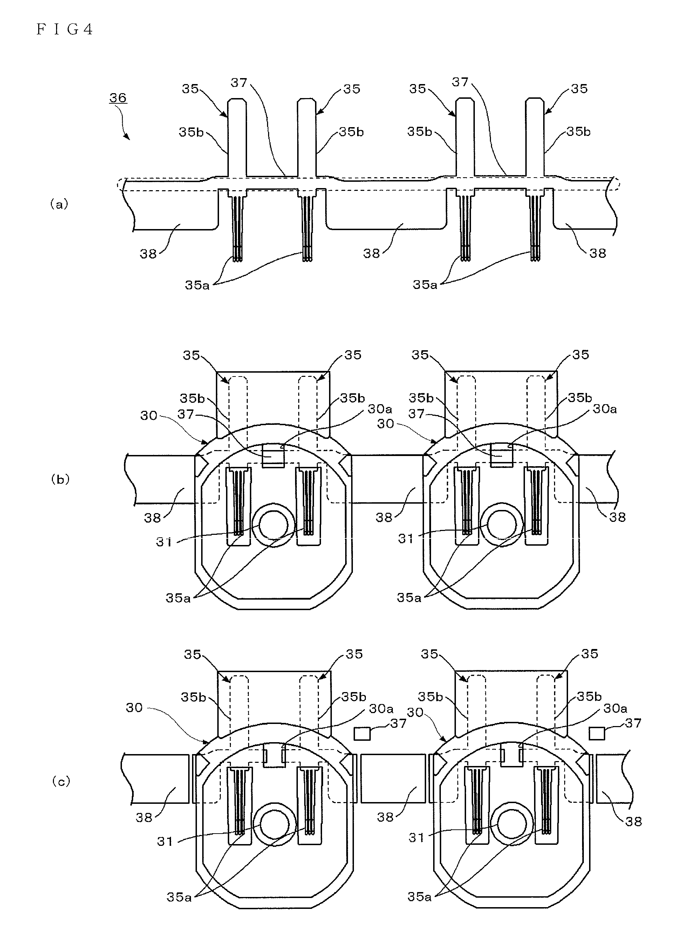

Next, a description will be given of a method of manufacturing the liquid level detection device 1 according to this embodiment of the invention. Fig. 4 is schematic views showing in manufacturing order ((a) to (c)) of a method of manufacturing the support frame 30 configuring the liquid level detection device 1 according to this embodiment of the invention.

Firstly, there is prepared a terminal continuous body 36 wherein plural liquid level detection terminals 35 are integrated by being connected by a coupling portion 37 and carrier portion 38 (the two combined are referred to as a coupling member), as shown in Fig. 4(a). The terminal continuous body 36 is configured by a pair of liquid level detection terminals 35 to be embedded in one support frame 30 being coupled by the coupling portion 37, and furthermore, plural pairs of liquid level detection terminals 35 being coupled by the carrier portion 38. As the carrier portion 38 functions as a region gripped or adsorbed when handling the terminal continuous body 36, it has a large area compared with that of the coupling portion 37.

The coupling portion 37 and carrier portion 38 are disposed so that a region formed in linear form in the left to right direction in the diagram is formed in the terminal continuous body 36, as shown by a range bounded by the broken line in Fig. 4(a). By disposing the coupling portion 37 and carrier portion 38 in this way, a smooth stress transfer is realized in the left to right direction of the terminal continuous body 36 in the diagram, and it is possible to increase the rigidity of the terminal continuous body 36. Also, by disposing the coupling portion 37 in the vicinity of the center of the liquid level detection terminal 35, it is possible to reduce the likelihood of an undesirable deformation, such as twisting, occurring in the terminal continuous body 36. Also, as it is possible to dispose the coupling portion 37 and carrier portion 38 on the border between the slide terminal 35a and external output terminal 35b, it is possible to perform a bending processing on the external output terminals 35b to be connected to the leads 33, thus achieving an increase in strength. In this way, by disposing the coupling portion 37 in the vicinity of the center of the liquid level detection terminal 35, and forming the region formed in linear form in the terminal continuous body 36, it is possible to make the terminal continuous body 36 easier to handle, and thus possible to facilitate the manufacture of the liquid level detection device 1.

Continuing, the prepared terminal continuous body 36 is disposed in molds (not shown) for molding the support frame 30. A number of molds (not shown) the same as the number of pairs of liquid level detection terminals 35 formed in the terminal continuous body 36 are prepared. Then, the material of the support frame 30 is pressure injected in a fluid form into the molds (not shown), and hardened. By doing so, it is possible to mold plural support frames 30 connected by the carrier portion 38, as shown in Fig. 4 (b). The support frames 30 shown in Fig. 4(b) are such that the pair of liquid level detection terminals 35 embedded in one support frame 30 are in a condition wherein they are coupled by the coupling portion 37. Also, neighboring support frames 30 are in a condition wherein they are connected by the carrier portion 38. The coupling portion 37 is disposed in the position of the disconnection aperture portion 30a formed in the support frame 30, because of which it is in a condition in which it is exposed by the disconnection aperture portion 30a.

Next, the coupling portion 37 connecting the pair of liquid level detection terminals 35 and the carrier portion 38 connecting the support frames 30 are disconnected and removed, as shown in Fig. 4(c). By doing so, the connected condition of the pair of liquid level detection terminals 35 is broken, and the support frames 30 are individually detached, thus completing the support frame 30.

In this way, according to the method of manufacturing the liquid level detection device 1 according to this embodiment of the invention, it is possible to form plural support frames 30 by setting the terminal continuous body 36, in which plural liquid level detection terminals are formed, in the molds all at once. Also, it is possible to fabricate individual support frames 30 by disconnecting and removing the coupling portion 37 and carrier portion 38 of the terminal continuous body 36. Because of this, there is no need for a step wherein the liquid level detection terminals 35 are disposed in a mold one by one, as heretofore done, the liquid level detection terminal manufacturing process is simplified, and it is possible to reduce the cost of manufacturing the liquid level detection device.

In the heretofore described embodiment, the terminal continuous body 36 in which are formed the liquid level detection terminals 35 for plural support frames 30 is disposed by setting in molds for the plural support frames 30, but an arrangement may of course be such that a terminal continuous body in which only one pair of liquid level detection terminals 35 are connected by the coupling portion 37 is set in a mold for one support frame 30, and the support frame 30 molded. With this kind of method, there is no need to form the carrier portion 38 of the terminal continuous body 36.

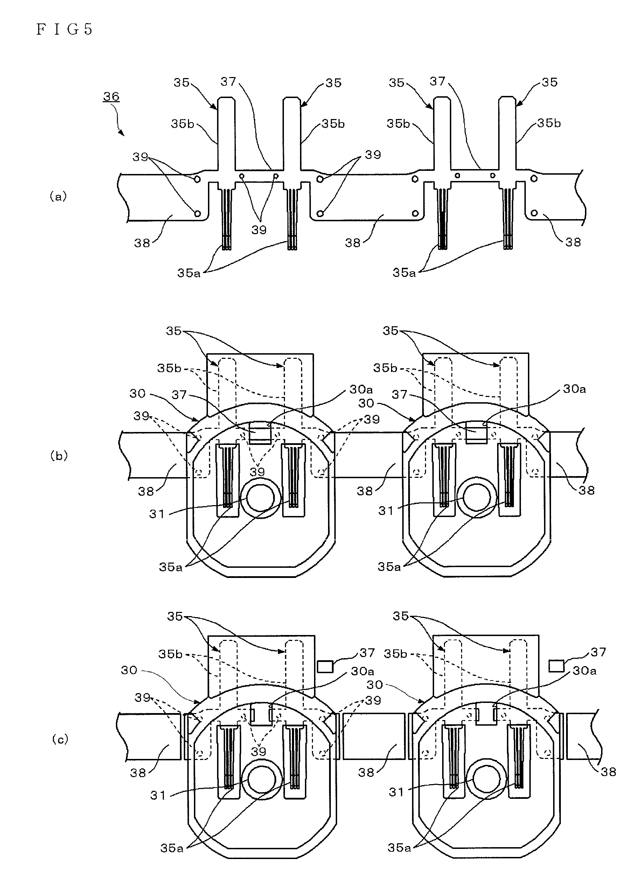

The invention not being limited to the heretofore described embodiment, various applications and modifications are possible. Hereafter, a description will be given of another embodiment of the invention. Fig. 5 is schematic views showing in manufacturing order ((a) to (c)) of a method of manufacturing the support frame 30 configuring the liquid level detection device 1 according to the other embodiment of the invention.

With the method of manufacturing the liquid level detection device 1 according to this embodiment, a point that anchoring holes 39 are formed in the coupling portion 37 and carrier portion 38 of the terminal continuous body 36 differs from the heretofore described embodiment. As other configurations are the same, the same reference numerals and signs are given in Fig. 5 to members the same as those in the heretofore described embodiment, and in the following description, the description will be given centering on the point differing from the heretofore described embodiment.

Firstly, in the same way as in the heretofore described embodiment, there is prepared the terminal continuous body 36 wherein plural liquid level detection terminals 35 are connected to be formed. In the terminal continuous body 36, two anchoring holes 39 are formed in each coupling portion 37, and four anchoring holes 39 in each carrier portion 38. Next, the prepared terminal continuous body 36 is disposed in molds (not shown) for molding the support frame 30. Continuing, the material of the support frame 30 is pressure injected in a fluid form into the molds (not shown), and hardened. By doing so, it is possible to mold plural support frames 30 connected by the carrier portion 38, as shown in Fig. 5(b). Finally, the carrier portion 38 connecting the support frames 30 and the coupling portion 37 connecting the pair of liquid level detection terminals 35 are disconnected and removed, as shown in Fig. 5(c), thereby fabricating plural support frames 30.

At this point, a description will be given of an action of the anchoring holes 39 formed in the terminal continuous body 36. As shown in Fig. 5(c), the anchoring holes 39 are provided in the vicinity of positions in which the coupling portion 37 and carrier portion 38 of the liquid level detection terminals 35 are disconnected. The anchoring holes 39 of the terminal continuous body 36 disposed in the molds (not shown) are filled with the pressure injected material of the support frame 30. Because of this, the terminal continuous body 36 is securely fixed to the support frame 30 in the positions in which the anchoring holes 39 are formed, that is, in the vicinity of positions in which the coupling portion 37 and carrier portion 38 are disconnected. The portion of the terminal continuous body 36 securely fixed in this way can resist force (mainly tensile force) acting when the coupling portion 37 and carrier portion 38 are disconnected, as a result of which it is possible to prevent deformation of the liquid level detection terminals 35. Because of this, it is possible to stably carry out the disconnection of the terminal continuous body 36, and thus possible to increase the productivity of the liquid level detection terminals.

### Industrial Applicability

The invention can be utilized in a method of manufacturing a liquid level detection device that detects the liquid level (the position of the liquid surface) inside a tank, and in the liquid level detection device.

### Description of Reference Numerals and Signs

- 1: Liquid level detection device
- 10: Float
- 15: Float Arm
- 20: Arm holder
- 25: Circuit substrate
- 30: Support frame
- 30a: Disconnection aperture portion
- 35: Liquid level detection terminal
- 35a: Slide terminal
- 35b: External output terminal
- 36: Terminal continuous body
- 37: Coupling portion
- 38: Carrier portion
- 39: Anchoring hole

## Claims

1. A method of manufacturing a liquid level detection device that detects a liquid level using the fluctuation of a float, the method **characterized by** comprising:
preparing a terminal continuous body in which a plurality of terminals, having a slide terminal that slides on an electrode that pivots by receiving the fluctuation of the float and an external output terminal that outputs an electrical signal to the exterior, are formed coupled by a coupling member;
disposing the terminal continuous body in a mold for molding a frame body in which one portion of the terminal continuous body is embedded;
injecting material of the frame body into the mold in which the terminal continuous body is disposed, and molding the frame body; and
disconnecting and removing the coupling member from the molded frame body, breaking the condition of coupling between the plurality of terminals, wherein
the coupling member connects the centers, or vicinities of the centers, of the terminals.

2. The liquid level detection device manufacturing method according to claim 1, **characterized in that** the coupling member connects the boundaries of the slide terminals and external output terminals configuring the terminals.

3. The liquid level detection device manufacturing method according to claim 1 or 2, **characterized in that** the coupling member is disposed so that a region linear in the connection direction of the terminals is formed in the terminal continuous body.

4. The liquid level detection device manufacturing method according to any one of claims 1 to 3, **characterized in that** holes in which the frame body is embedded are formed in the vicinities of disconnection lines of the coupling member in the terminal continuous body.

5. The liquid level detection device manufacturing method according to any one of claims 1 to 4, **characterized in that** the frame body includes one pair of the terminals, wherein
the step of molding the frame body is such that an aperture for disconnecting and removing the coupling member coupling the pair of terminals is formed in the frame body in a portion corresponding to the position of the coupling member.

6. A liquid level detection device that detects a liquid level using the fluctuation of a float, the device **characterized by** comprising:
a frame body in which is embedded a pair of terminals having a slide terminal that slides on an electrode for detecting the liquid level using the fluctuation of the float and an external output terminal that outputs an electrical signal to the exterior, wherein
an aperture for separating the pair of terminals is provided in the frame body.

7. A liquid level detection device that detects a liquid level using the fluctuation of a float, the device **characterized by** comprising:
a frame body in which is embedded a pair of terminals having a slide terminal that slides on an electrode for detecting the liquid level using the fluctuation of the float and an external output terminal that outputs an electrical signal to the exterior, wherein
holes into which the frame body penetrates, provided in the vicinities of the outer edges of the frame body, are formed in the terminals.
